# EUROPEAN PATENT APPLICATION

(11) **EP 1 630 278 A2**
(43) Date of publication of application: **01.03.2006**
(21) Application number: 05015906.0
(22) Date of filing: 21.07.2005
(51) Int. Cl.: D06F 37/24, D06F 37/30, D06F 37/40

(54) **Washing machine and method for controlling the same**

(30) Priority: 31.08.2004 KR 2004069070; 31.08.2004 KR 2004069071
(71) Applicant: LG ELECTRONICS INC., Seoul 150-721 (KR)
(72) Inventor: Kim, Dong Won, Gwangmyeong-si, Gyeonggi-do (KR); Kim, Young Ho, Gwanak-gu, Seoul (KR); Min, Byoung Wook, Dongjak-gu, Seoul (KR)
(74) Representative: Diehl & Partner

(57) **Abstract**

A washing machine includes a washing shaft 100 that extends through an outer tub, and is coupled to an inner tub and a double rotor motor 200 coupled to the washing shaft 100. The double rotor motor 200 has two rotors 220,230 drivable independently from each other and wound independently from each other.

## Description

The present invention relates to washing machines, and more particularly, to a washing machine which can simplify a driving unit structure thereof, and reduce noise emitted therefrom; and a method for controlling the same.

In general, the washing machine washes laundry by action of circulation of washing water, and chemical action of detergent, and the like.

In the washing machines, there are top load type washing machines, front load type washing machines. In the top load type washing machines, there are tub rotating type, and pulsator type washing machines, and in the front load type washing machines, there are drum type washing machines, and so on.

The washing machine has an inner tub rotatably mounted in an outer tub, and a driving unit is coupled to the inner tub.

The driving unit may be of an indirect coupling type, in which a driving power is transmitted from a motor to a washing shaft through a belt to rotate the inner tub, or of a direct coupling type, in which the driving power is transmitted from the motor to the washing shaft directly to rotate the inner tub.

If the driving unit is of the direct coupling type, the washing shaft has a reduction gear and a clutch coupled thereto for changing a rotation speed of the inner tub. Moreover, there may be an additional driver for changing a rotation speed of the motor by itself.

However, the related art washing machine has the following problems.

First, the reduction gear and the clutch coupled to the direct coupling type driving unit leads a complicated structure of the driving unit and raises a production cost. Moreover, a relatively larger mounting space for the driving unit reduces a capacity of the inner tub, or increases a bulk of the washing machine itself.

Second, the engagement of a plurality of gears in the reduction gear, and the rotation speed change of the washing shaft with the clutch generate mechanical, and electrical noise.

Third, though an additional driver may be provided for speed change of the motor in the direct coupling type driving unit, the driver is expensive.

Accordingly, the present invention is directed to a washing machine, and a method for controlling the same that substantially obviates one or more problems due to limitations and disadvantages of the related art.

An object of the present invention is to provide a washing machine, and a method for controlling the same, in which a clutch, a reduction gear, and so on are eliminated, to simplify a driving unit structure, and to reduce noise.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a washing machine includes a washing shaft that extends through an outer tub, and is coupled to an inner tub, and a double rotor motor coupled to the washing shaft, the double rotor motor having two rotors drivable independently from each other and wound, independently from each other.

The double rotor motor includes a stator secured to the outer tub to surround the washing shaft, the stator having an inner winding portion, and an outer winding portion, an outer rotor having a rotational center connected to the washing shaft, and having at least one portion arranged opposite to the outer winding portion, and an inner rotor connected to the outer rotor or to the washing shaft, and arranged opposite to the inner winding portion.

The inner rotor extends from an outer circumferential surface of the washing shaft toward an inner surface of the stator, or from a surface of the outer rotor toward the outer tub.

In another aspect of the present invention, a method for controlling a washing machine includes washing by applying power to an outer winding portion to rotate a washing shaft, and spinning by applying power to the inner winding portion, to rotate the washing shaft.

The method further includes rinsing by applying power to the inner winding portion or the outer winding portion, to rotate the washing shaft.

It is preferable that the washing shaft rotates at a high speed in the spinning relative to the washing. It is preferable that the washing shaft is rotated in regular/reverse direction in the washing.

In another aspect of the present invention, a washing machine includes a first washing shaft that extends through an outer tub, and is coupled to an inner tub, a second washing shaft rotatably positioned in the first washing shaft, and coupled to a pulsator, and a double rotor motor coupled to the first washing shaft and the second washing shaft, the double rotor motor configured to rotate for rotating the first washing shaft and the second washing shaft, independently of each other.

The double rotor motor includes a stator fixedly secured to the outer tub to surround the first washing shaft, the stator having an inner winding portion and an outer winding portion, an inner rotor secured to the first washing shaft, and arranged opposite to the inner winding portion, and an outer rotor having a rotation center connected to the second washing shaft, and arranged opposite to the outer winding portion.

The washing machine further includes bearings between the first washing shaft, the second washing shaft, and the outer tub, respectively.

In another aspect of the present invention, a method for controlling a washing machine includes rotating an inner rotor and an outer rotor in opposite directions to perform washing, and rotating the inner rotor and the outer rotor in the same direction to perform spinning:

The method further includes rotating the inner rotor and the outer rotor in opposite directions to perform rinsing.

Preferably, the inner rotor is rotated at a speed higher than the outer rotor to perform washing, the inner rotor is rotated at the same speed as the outer rotor to perform spinning, and the inner rotor is rotated at a speed higher than the outer rotor to perform rinsing.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings;
FIG. 1 illustrates a diagram of a washing machine in accordance with a first preferred embodiment of the present invention, schematically;
FIG. 2 illustrates a diagram of a variation of the driving unit in FIG. 1, schematically;
FIG. 3 illustrates a graph showing a torque of the driving unit of the washing machine in FIG. 1;
FIG. 4 illustrates a diagram showing an operation state of the driving unit in a washing cycle of the washing machine in FIG 1;
FIG. 5 illustrates a diagram showing an operation state of the driving unit in a spinning cycle of the washing machine in FIG 1;
FIG. 6 illustrates a diagram of a washing machine in accordance with a first preferred embodiment of the present invention, schematically;
FIG 7 illustrates a diagram showing an operation state of the driving unit in a washing cycle of the washing machine in FIG 6; and
FIG. 8 illustrates a diagram showing an operation state of the driving unit in a spinning cycle of the washing machine in FIG. 6.

Reference will now be made in detail to the preferred embodiments of the present invention, examples of which are illustrated in the accompanying drawings. Wherever possible, the same reference numbers will be used throughout the drawings to refer to the same or like parts.

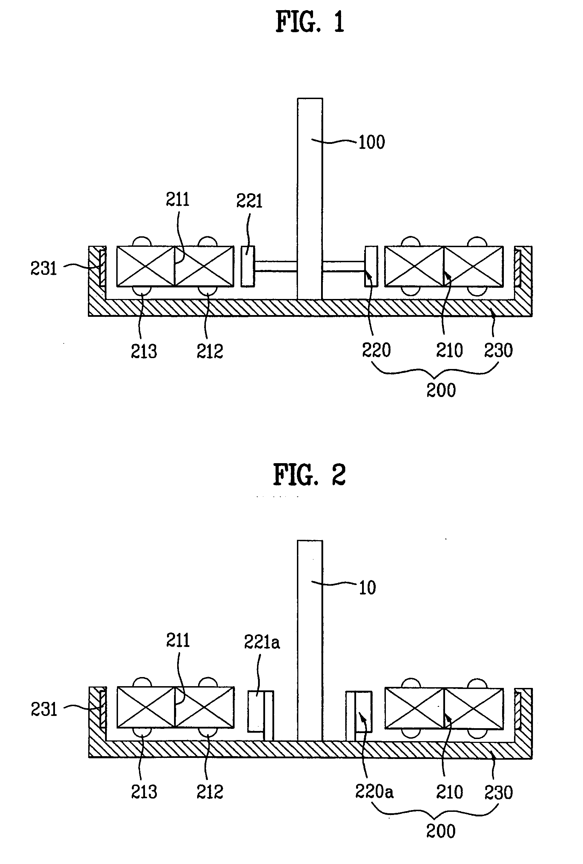

A first embodiment of the present invention will be described with reference to FIGS. 1 to 5.

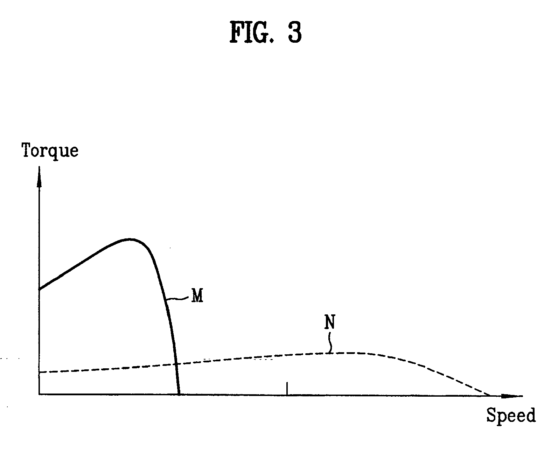

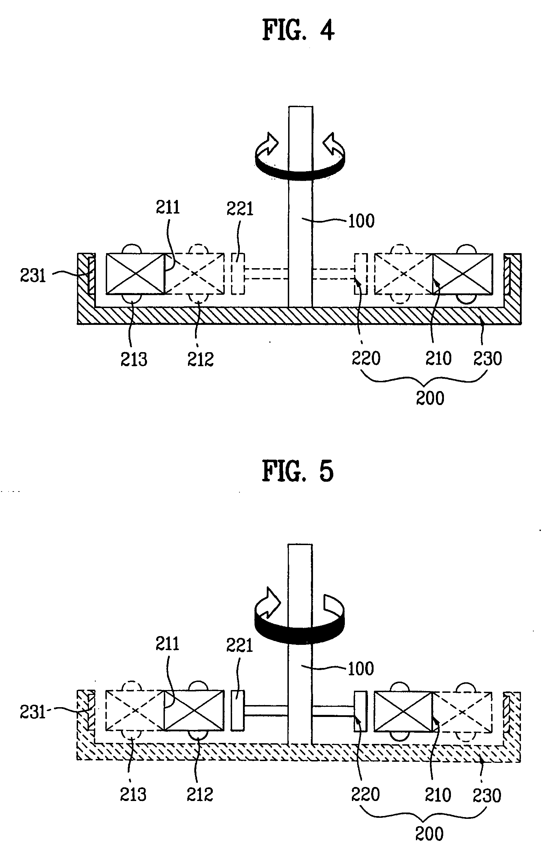

FIG. 1 illustrates a diagram of a washing machine in accordance with a first preferred embodiment of the present invention schematically, FIG. 2 illustrates a diagram of a variation of the driving unit in FIG 1 schematically, FIG 3 illustrates a graph showing a torque of the driving unit of the washing machine in FIG 1, FIG. 4 illustrates a diagram showing an operation state of the driving unit in a washing cycle of the washing machine in FIG. 1, and FIG 5 illustrates a diagram showing an operation state of the driving unit in a spinning cycle of the washing machine in FIG. 1.

Referring to FIG. 1, the driving unit of the washing machine includes a washing shaft 100 passed through an outer tub (not shown), and coupled to an inner tub (not shown), and a double rotor motor 200 coupled to the washing shaft, having two rotors that are independent from each other and are wound independently, for varying a rotation speed of the washing shaft.

The double rotor motor 200 is mounted on the drum type washing machine or the tub rotating type washing machine of a direct coupling type. For an example, the washing shaft 100 is coupled to a drum of the drum type washing machine, directly.

The double rotor motor 200 includes a stator 210, an inner rotor 220, and an outer rotor 230.

The stator 210 is fixedly secured to an outer tub (not shown) to surround the washing shaft 100. For an example, the stator is arranged in an annular shape around the washing shaft.

The stator 210 has a core 211 consisting of an inner winding portion 212, and an outer winding portion 213.

The inner rotor 220 is secured to the washing shaft 100 or the outer rotor 230, and arranged opposite to the inner winding portion 212:

For an example, referring to FIG. 1, the inner rotor 220 is extended from an outside circumferential surface of the washing shaft 100 toward an inside surface of the stator 210. Or, alternatively, referring to FIG. 2, the inner rotor 220a may be extended from one surface of the outer rotor 230 toward the outer tub.

The outer rotor 230 has a rotation center connected to the washing shaft 100, and arranged opposite to the outer winding portion 213.

The double rotor motor will be described in more detail.

The stator 210 includes a stator core 211, and the inner, and outer winding portions 212, and 213 each having a coil wound on the stator core. The inner winding portion 212 is arranged on an inner side of the stator 210, and the outer winding portion 213 is arranged on an outer side of the stator 210.

The double rotor motor is an induction motor in which rotating force is generated by interaction of a rotating magnetic field formed by a current flowing through the winding portions of the stator 210 and a current induced at the cores of the rotor. The double rotor motor may be a brushless motor in which rotating force is generated by magnetic forces generated at the winding portions of the stator 210 and magnets on the rotor.

Referring to FIG. 1, as an example of the induction motor, the inner, and outer winding portions 212, and 213 of the stator core 211 are wound in distributed windings. The inner rotor 220 has a rotor core 221 mounted on a circumference thereof opposite to the inner winding portion 212, and the outer rotor 230 has a rotor core 231 on a circumference thereof opposite to the outer winding portion 213.

Such an induction motor controls rotation speeds of the inner rotor 220 and outer rotor 230 by on/off control or a phase control.

As an example of the brushless motor, though not shown, the inner, and outer winding portions of the stator core are wound in concentrated windings. The inner rotor has N pole, and S pole magnets arranged alternately on a circumference of the rotor opposite to the inner winding portion, and the outer rotor has N pole, and S pole magnets arranged alternately on a circumference of the rotor opposite to the outer winding portion. The brushless motor has rotation speeds of the inner, and outer rotors controlled by an additional drive. The drive has a rectifying circuit for sensing a position of the rotor with a hole sensor, to control an electronic circuit in response to a signal sensed thus, to generate a rotating magnetic field. As such a rectifying circuit, a special purpose IC (integrated circuit) is used.

It is apparent that it is within the scope of the present invention that the double rotor motor may have a number of poles, a number of phases, and winding methods varied with a capacity, and design of the washing machine.

The operation of the driving unit will be described.
Upon starting the washing cycle, power is applied to the outer winding portion 213 of the stator 210, such that the outer rotor 230 is rotated in a regular/reverse direction, periodically.

In this instance, the driving force is generated by electromagnetic interaction of the outer winding portion 213 and the core 211 of the outer rotor 230, and the driving force rotates the washing shaft 100 in a regular/reverse direction. The rotating force of the washing shaft 100 is transmitted to the inner tub. As the inner tub rotates in the regular/reverse direction, the laundry is washed.

Upon finishing the washing cycle, the rinsing cycle is started after washing water is drained, and fresh wash water supplied. After the rinsing cycle, the washing water is drained, and the spinning cycle is performed.

Upon starting the spinning cycle, power is applied to the inner winding portion 212. Then, driving force is generated by electromagnetic interaction between the inner winding portion 212 and the inner rotor 220, and the driving force is transmitted to the inner tub through the washing shaft 100. As the inner tub spins, the washing water is extracted from the laundry and drained to an outside of the washing machine.

A method for controlling the driving unit will be described.

In a washing cycle, power is applied to the outer winding portion 213, to rotate the washing shaft 100, and, in a spinning cycle, power is applied to the inner winding portion 212 to rotate the washing shaft 100.

Thus, referring to FIG 3, since a high torque is required for pulsating laundry and washing water in the washing cycle, it is preferable that the outer rotor 230 is rotated at a low speed (an M curve). Of course, in the washing cycle, the inner rotor may alternatively be rotated at a low speed.

Since a low torque is required in the spinning cycle, it is preferable that power is applied to the inner winding portion 212, for rotating the washing shaft 100 at a high speed (an N curve). Of course, in the spinning cycle, power may alternatively be applied to the outer winding portion, for rotating the washing shaft at a high speed.

In such a control method, it is preferable that the washing shaft 100 is rotated at a relatively higher speed in the spinning cycle than in the washing cycle. It is more preferable that the washing shaft 100 is rotated in a regular/reverse direction in the washing cycle. This is because the regular/reverse direction rotation is favorable for pulsating the laundry and the washing water.

In the rinsing cycle, power is applied to the inner winding portion or the outer winding portion selectively, for rotating the washing shaft.

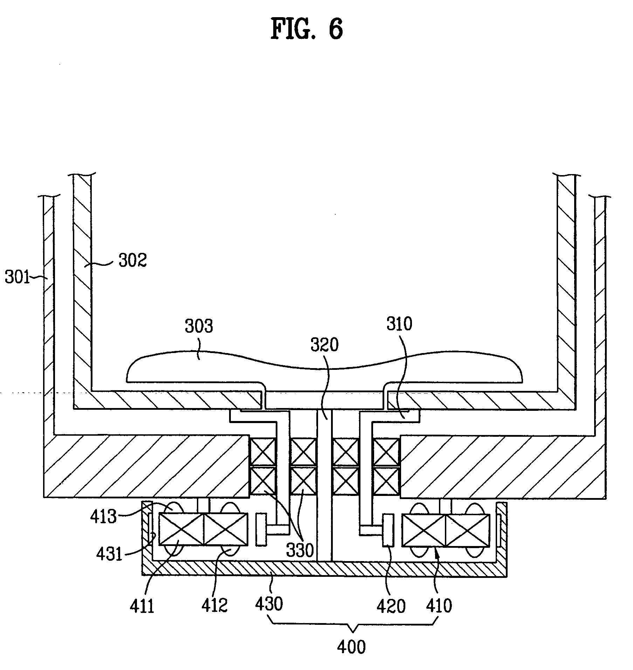

A washing machine in accordance with a second preferred embodiment of the present invention will be described with reference to FIGS. 6 to 8.

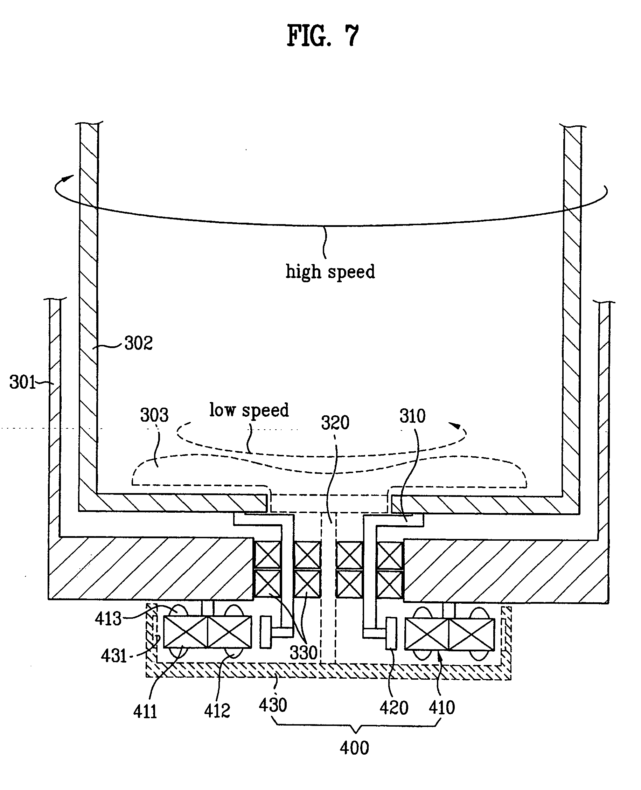

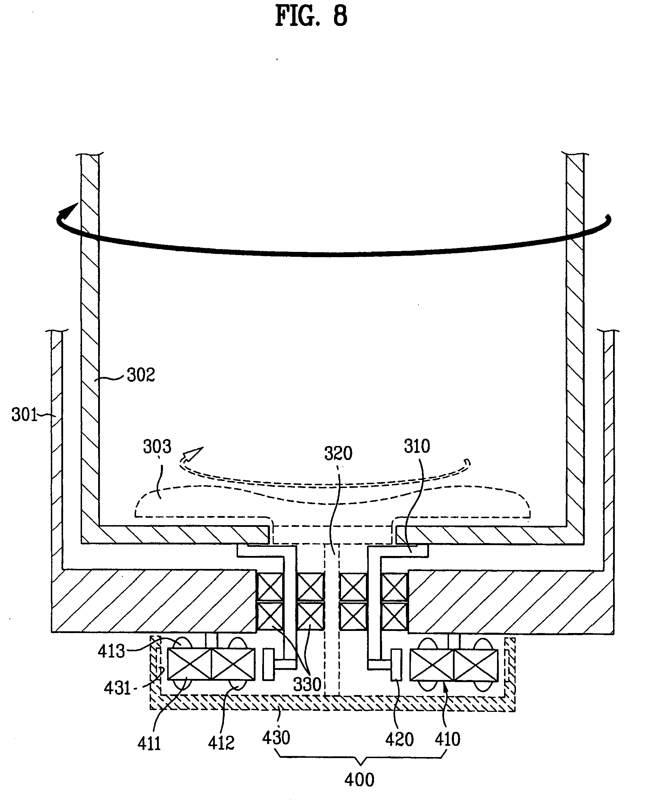

FIG. 6 illustrates a diagram of a washing machine in accordance with a first preferred embodiment of the present invention schematically, FIG. 7 illustrates a diagram showing an operation state of the driving unit in a washing cycle of the washing machine in FIG 6, and FIG 8 illustrates a diagram showing an operation state of the driving unit in a spinning cycle of the washing machine in FIG. 6.

Referring to FIG. 6, the washing machine includes a first washing shaft 310 passed through an outer tub 301, and coupled to an inner tub 302, a second washing shaft 320 rotatably placed in the first washing shaft 310, and coupled to a pulsator 303, and a double rotor motor 400 coupled to the first washing shaft 310 and the second washing shaft 320, and wound such that the first washing shaft 310 and the second washing shaft 320 are rotated, independently.

The double rotor motor 400 includes a stator 410, an inner rotor 420, and an outer rotor 430.

The stator 410 is fixedly secured to the outer tub to surround the first washing shaft 310. The stator has a core consisting of an inner winding portion 412 and an outer winding portion 413.

The double rotor motor will be described in more detail.

The stator 410 has an annular shape in overall. The stator 410 has a stator core 411, and inner, and outer winding portions 412, and 413 each having a coil wound on the stator core 411. The inner winding portion 412 is arranged on an inner side of the stator 410 and the outer winding portion 413 is arranged on an outer side of the stator 410.

The inner rotor 420 is fixedly secured to the first washing shaft 310, and arranged opposite to the inner winding portion 412 of the stator 410, and the outer rotor 430 has a rotation center connected to the second washing shaft 320, and arranged opposite to the outer winding portion 413.

The double rotor motor 400 may be, for example, an induction motor, or a brushless motor. Since such motors are described in the first embodiment, detailed description of the motors will be omitted.

It is apparent that it is within the scope of the present invention that the double rotor motor 400 may have a number of poles, a number of phases, and winding methods varied with a capacity, and design of the washing machine.

In the meantime, it is preferable that bearings 330 are mounted for rotatably supporting the first washing shaft 310 and the second washing shaft 320. For an example, the bearings 330 are mounted between the first washing shaft 310, the second washing shaft 320, and the outer tub 301, respectively. According to this, the first, and second washing shafts 310, and 320 can rotate independently following rotation of the inner rotor 420 and/or the outer rotor 430.

In order to prevent the washing water from leaking from the outer tub, it is preferable to form a structure which can seal gaps between the bearings and the washing shafts, respectively. Any such suitable sealing mechanism can be utilized.

The operation of the washing machine in accordance with a second preferred embodiment of the present invention will be described in detail.

The washing machine performs a washing cycle, a draining cycle, a spinning cycle, and a rinsing cycle, selectively, or in a predetermined sequence, optionally. Upon starting the washing cycle, power is applied to the double rotor motor 400.

If the double rotor motor 400 is the induction motor, the driving force is generated by interaction of a rotating magnetic field formed by a current flowing through the inner winding portion 412 and the outer winding portion 413 of the stator 410 and an induced electromotive force generated at the cores 431 of the inner rotor 420 and the outer rotor 430.

If the double rotor motor 400 is a brushless motor, a rectifying circuit of the drive senses a position of the rotor with e.g. a hole sensor, and controls an electronic circuit with reference to a signal from the hole sensor, to generate a rotating magnetic field.

Referring to FIG 7, the inner rotor 420 and the outer rotor 430 rotate in opposite directions. The inner rotor rotates at a speed relatively lower than the outer rotor.

The driving force of the inner rotor 420 transmitted to the inner tub through the first washing shaft 310, and, at the same time, the driving force of the outer rotor 430 is transmitted to the pulsator 303 through the second washing shaft 320. The bearings between the first, and second washing shafts make the washing shafts rotatable, independently.

The first washing shaft 310 rotates the inner tub at a relatively high speed, and the second washing shaft 320 rotates the pulsator 303 at a relatively low speed.

Thus, as the inner tub and the pulsator rotate in opposite directions and pulsate, water circulation is formed more sharply, to improve washing force of the laundry. Upon finishing the washing cycle, the draining cycle is started, to drain washing water. Thereafter, the spinning cycle is started.

Upon starting the spinning cycle, power is applied to the double rotor motor 400.

The inner rotor 420 and the outer rotor 430 rotate at the same direction, and at the same speed. Moreover, the inner rotor and the outer rotor rotate at a speed relatively higher than the washing cycle.

The driving force of the inner rotor 420 is transmitted to the inner tub through the first washing shaft 310, and, at the same, the driving force of the outer rotor 430 is transmitted to the pulsator 303 through the second washing shaft 320.

Then, the first, and second washing shaft 310, and 320 rotate the inner tub and the pulsator at the same speed, respectively. In this instance, both the inner tub and the pulsator rotate at a speed higher than the washing cycle. According to this, the washing water is extracted from the laundry, and drained.

A method for controlling the washing machine in accordance with a second preferred embodiment of the present invention will be described.

In the washing cycle, power is applied to the inner winding portion 412 and the outer winding portion 413, to rotate the inner rotor 420 and the outer rotor 430 in opposite directions (see FIG 7). In this instance, the inner rotor 420 may rotate at a high, or the same speed with the outer rotor 430. In this instance, in the washing cycle, the inner rotor and the outer rotor 430 may rotate in opposite directions, periodically.

Moreover, in the spinning cycle, it is preferable that the inner rotor 420 and the outer rotor 430 are rotated in the same direction (see FIG. 8) by applying power to the inner winding portion 412 and the outer winding portion 413. It is preferable that the inner rotor 420 and the outer rotor 430 are rotated at the same speed, for preventing damage to the laundry.

In this instance, in the spinning cycle, it is preferable that the two rotors 420, and 430 are rotated at a relatively higher speed than the washing cycle.

Moreover, in the rinsing cycle, it is preferable that the inner rotor and the outer rotor are rotated in opposite directions, for easier formation of water circulation. In this instance, it is preferable that the inner rotor has a rotation speed higher than the outer rotor.

As has been described, the washing machine of the present invention has the following advantages.

First, the double rotor motor enables dispensing with the reduction gear and the clutch, and makes speed control of the inner tub and the pulsator easier.

Second, the dispensing with the reduction gear and the clutch leads to have a simple driving unit structure, and a reduced mounting space, thereby increasing a washing capacity.

Third, the mechanical noise generated at the time of driving the reduction gear and the clutch can be eliminated from the source.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

Accordingly, a washing machine is provided, including a washing shaft that extends through an outer tub, and is coupled to an inner tub and a double rotor motor coupled to the washing shaft. The double rotor motor has two rotors drivable independently from each other and wound independently from each other.

## Claims

1. A washing machine comprising:
a washing shaft (100) that extends through an outer tub, and is coupled to an inner tub; and
a double rotor motor (200) coupled to the washing shaft, the double rotor motor (200) having two rotors (220, 230; 220a, 230) drivable independently from each other and wound independently from each other.

2. The washing machine as claimed in claim 1, wherein the double rotor motor (200) comprises:
a stator (210) secured to the outer tub to surround the washing shaft, the stator having an inner winding portion, and an outer winding portion,
an outer rotor (230) having a rotational center connected to the washing shaft, and having at least a portion arranged opposite to the outer winding portion, and
an inner rotor (220; 220a) connected to the outer rotor or to the washing shaft, and arranged opposite to the inner winding portion.

3. The washing machine as claimed in claim 2, wherein the stator (210) is configured in an annular shape around the washing shaft (100),
the inner rotor (220; 220a) comprises magnets opposed to the inner winding portion (212) of the stator (210), and
the outer rotor (230) surrounds an outer side of the stator (210) and the inner rotor (220; 220a), and comprises magnets opposed to the outer winding portion (213) .

4. The washing machine as claimed in claim 2 or 3, wherein the inner rotor (220) extends from an outer circumferential surface of the washing shaft (100) toward an inner surface of the stator (210).

5. The washing machine as claimed in claim 2 or 3, wherein the inner rotor (220a) extends from a surface of the outer rotor (230) toward the outer tub.

6. A method for controlling a washing machine comprising:
applying power to an outer winding portion (213) to rotate a washing shaft (100) to perform a washing operation; and
applying power to the inner winding portion (212), to rotate the washing shaft (100) to perform a spinning operation.

7. The method as claimed in claim 6, further comprising applying power to the inner winding portion (212) or the outer winding portion (213), to rotate the washing shaft (100) to perform a rinsing operation.

8. The method as claimed in claim 6 or 7, wherein the washing shaft (100) rotates at a high speed in the spinning operation relative to the washing operation.

9. The method as claimed in one of claims 6 to 8, wherein the washing shaft (100) is rotated in regular/reverse direction in the washing operation.

10. A method for controlling a washing machine comprising:
applying power for washing to an inner winding portion (212) to rotate a washing shaft (100); and
applying power for spinning to the outer winding portion (213), to rotate the washing shaft (100).

11. The method as claimed in claim 10, further comprising applying power for rinsing to the inner winding portion (212) or the outer winding portion (213), to rotate the washing shaft (100).

12. The method as claimed in claim 10 or 11, wherein the washing shaft (100) rotates at a high speed in the spinning relative to the washing.

13. The method as claimed in one of claims 10 to 12, wherein the washing shaft (100) is rotated in regular/reverse direction in the washing step.

14. A washing machine comprising:
a first washing shaft (310) that extends through an outer tub (301), and is coupled to an inner tub (302);
a second washing shaft (320) rotatably positioned in the first washing shaft (310), and coupled to a pulsator (303); and
a double rotor motor (400) coupled to the first washing shaft (310), and the second washing shaft (320), the double rotor motor (400) configured to rotate the first washing shaft (310) and the second washing shaft (320), independently.

15. The washing machine as claimed in claim 14, wherein the double rotor motor (400) includes:
a stator (410) fixedly secured to the outer tub (301) to surround the first washing shaft (310), the stator (410) having an inner winding portion (412) and an outer winding portion (413),
an inner rotor (420) secured to the first washing shaft (310), and arranged opposite to the inner winding portion (412), and
an outer rotor (430) having a rotation center connected to the second washing shaft (320), and arranged opposite to the outer winding portion (413).

16. The washing machine as claimed in claim 14 or 15, wherein the double rotor motor (400) is an induction motor, or a brushless motor.

17. The washing machine as claimed in one of claims 14 to 16, further comprising bearings between the first washing shaft (310), the second washing shaft (320), and the outer tub (301), respectively.

18. A method for controlling a washing machine comprising:
for rotating an inner rotor (420) and an outer rotor (430) in opposite directions to perform washing; and
for rotating the inner rotor (420) and the outer rotor (430) in the same direction to perform spinning.

19. The method as claimed in claim 18, further comprising rotating the inner rotor (420) and the outer rotor (430) in opposite directions to perform rinsing.

20. The method as claimed in claim 18 or 19, further comprising rotating the inner rotor (420) at a speed higher than the outer rotor (430) to perform washing.

21. The method as claimed in one of claims 18 to 20, further comprising rotating the inner rotor (420) at a same speed as the outer rotor (430) to perform spinning.

22. The method as claimed in one of claims 18 to 21, further comprising rotating the inner rotor (420) at a speed higher than the outer rotor (430) to perform rinsing.

23. The method as claimed in one of claims 18 to 22, further comprising rotating the inner rotor (420) and the outer rotor (430) alternately to perform washing.
